(19) Europäisches Patentamt
European Patent Office
Office européen des brevets

(11) EP 4 116 091 A1

(12) EUROPEAN PATENT APPLICATION

(43) Date of publication:
**11.01.2023 Bulletin 2023/02**

(21) Application number: **21184144.0**

(22) Date of filing: **07.07.2021**

(51) International Patent Classification (IPC):
***B32B 27/08*** *(2006.01)* ***B32B 27/32*** *(2006.01)*

(52) Cooperative Patent Classification (CPC):
**B32B 27/08; B32B 27/32; B32B 27/327; C08F 210/16;** B32B 2250/02; B32B 2250/03; B32B 2250/242; B32B 2270/00; B32B 2307/31; B32B 2307/72; B32B 2439/06; B32B 2439/70; B32B 2439/80

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **ALABRUNE, Arnaud**
  **92400 Courbevoie (FR)**
- **SEMAAN, Chantal**
  **43003 Tarragona (ES)**

(74) Representative: **Borealis AG**
**Borealis Polyolefine GmbH**
**IPR-Department**
**St.-Peter-Straße 25**
**4021 Linz (AT)**

(54) **MULTILAYER FILM**

(57) Multilayer films comprising at least one layer (A), being a sealing layer (SL), and one layer (B), with beneficial heat sealing and hot tack properties. In particular, the invention relates to a multilayer packaging film comprising a sealing layer (SL) based on a specific multimodal metallocene catalysed LLDPE.



Processed by Luminess, 75001 PARIS (FR)

## Description

The present invention relates to multilayer films comprising at least one layer (A), being a sealing layer (SL), and one layer (B), with beneficial heat sealing and hot tack properties. In particular, the invention relates to a multilayer packaging film comprising a sealing layer (SL) based on a specific multimodal metallocene catalysed LLDPE.

High standards are nowadays required for packaging materials. Quite often properties are required in the packaging industry, which are conflicting. Typically, high stiffness and toughness as well as excellent sealing behavior and good optics are required in parallel. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry, the latter being even more popular since the choice of materials is more diverse without the need to consider the demanding technical questions of complex polymer blends. With multilayer structures known in the art already multilayer films with good properties for the packaging industry are achieved. One of the classic examples is the combination of two polyethylene layers, one being a sealing layer based on a linear low density polyethylene (LLDPE) with density about 0.918 g/cm$^3$ and another being the core layer based on a medium density polyethylene (MDPE) or a linear low density polyethylene (LLDPE) with higher density which improves the mechanics. Such kind of combination has the weakness that an acceptable stiffness/toughness balance is reached at the expense of the optical properties due to the polyethylene with higher density.

A great variety of multilayer films have also been disclosed which should solve the above problems of non-satisfactory balance of mechanical properties, especially stiffness and toughness, and processability.

For example, WO 2008/104371 discloses multilayer film laminate which comprises a multilayer film with, in the given layer order, an inner layer (A), a core layer (B) and an outer layer (C), which is laminated to a substrate.

The inner layer (A) comprises a multimodal polyethylene composition, i.e. a bimodal linear low density polyethylene (LLDPE), having a density of 940 kg/m3 or less, a molecular weight distribution Mw/Mn of at least 8 and a $MFR_2$ of 0.01 to 20 g/10 min when determined according to ISO 1133 (at 190 °C and 2.16 kg load).

Preferably, the LLDPE comprises an ethylene hexene copolymer, ethylene octene copolymer or ethylene butene copolymer.

Layer (C) comprises a LLDPE, which can be an unimodal or multimodal LLDPE. Moreover, the LLDPE can be znLLDPE or the LLDPE can be obtained by polymerization using a metallocene catalyst (mLLDPE). Both mLLDPE and znLLDPE alternatives are preferable. Also preferably, layer (C) may comprise a low-density polyethylene (LDPE) homo- or copolymer composition obtained by high-pressure polymerization.

Layer (B) can comprise or consists of the same polymer composition as used in layer (A) or layer (C).

Borstar® FB2310 or Borstar® FB2230 as commercial grades of LLDPE's are given as examples as feasible multimodal LLDPE grades for at least layer (A) and, if present, for optional layer(s), such as layer (B).

Film properties, like sealing initiation temperature (SIT) or hot tack force are not mentioned at all.

WO 2006/037603 discloses a 3-layer structure, wherein the outer layers comprise LLDPE, preferably unimodal LLDPE, especially unimodal mLLDPE. The LLDPE is preferably a C2/C6-copolymer. One or both outer layers may contain LDPE.

It is further disclosed, that a specific film may comprise a first outer layer comprising a unimodal LLDPE and LDPE blend with the other outer layer being formed from multimodal LLDPE optionally combined with an LDPE component.

The core layer comprises a multimodal polyethylene component having a lower molecular weight component and a higher molecular weight component, i.e. a multimodal LLDPE.

Thus, the multimodal PE comprises a higher molecular weight component, which preferably corresponds to an ethylene copolymer and a lower molecular weight component, which corresponds to an ethylene homopolymer or copolymer. Such 3-layer films are especially suitable for producing pouches.

Film properties, like sealing initiation temperature (SIT) or hot tack force are not mentioned at all.

For packaging companies it is of utmost importance to reduce the sealing initiation temperature (SIT) of a packaging film. Even more in the view of a sustainable and circular approach, low sealing temperature, low hot tack temperature (HTT) and high hot tack force (HTF) are required. Lower SIT and higher HTF allows running the packaging lines faster and/or at lower temperatures, thus saving costs and energy.

Starting therefrom it was an objective of the present invention to provide multilayer films having a lower SIT and HTT as well as a higher HTF than the multilayer films known from the prior art. In addition, it was the objective of the present invention to provide multilayer films having mechanical properties being at least on the same level than the materials known from the prior art.

Another problem is the recycling of packaging material after their first use. It is much more challenging to recycle packaging films made of different materials, e.g. different plastics, than to recycle mono-material solutions. On the other hand, the use of different materials is sometimes necessary to obtain acceptable properties, like sealing properties and

mechanical properties. Therefore, another objective of the present invention is the provision of a polyethylene based mono-material solution, which shows a good sealing behaviour.

The present inventors have found that a multilayer polyethylene film comprising certain carefully selected components, especially for the sealing layer, provides a film with low seal initiation temperature (SIT), low hot tack temperature and improved high hot tack force. In particular, the film of the invention can provide sealability at a very low temperature of 70°C or below and improved hot tack force. The sealing time is short and the resulting films have good stiffness and impact strength (dart drop). The improved sealing behaviour is achieved without a reduction of optical properties, like haze.

## Summary of Invention

The present invention is therefore directed to a multilayered polyethylene film comprising at least a layer (A), being a sealing layer (SL), and a layer (B),
wherein the sealing layer (SL) comprises:

i) 60.0 wt% to 100 wt%, based on the total weight of the sealing layer (SL), of a first multimodal metallocene catalysed linear low density polyethylene (mLLDPE-1) having a density in the range of 910 to 916 kg/m$^3$ (ISO 1183) and an $MFR_2$ (190°C, 2.16 kg, ISO 1133) in the range of 0.5 to 2.5 g/10 min; and
ii) 0.0 wt% to 40wt%, based on the total weight of the sealing layer (SL), of an ethylene-1-octene or ethylene-1-butene plastomer having a density in the range of 860 to 910 kg/m$^3$ (ISO1183) and an $MFR_2$ (190°C, 2.16 kg, ISO 1133) in the range of 0.5 to 10.0 g/10 min; and/or
iii) 0.0 wt% to 20 wt%, based on the total weight of the sealing layer (SL), of a low density polyethylene (LDPE) having a density in the range of 910 to 940 kg/m$^3$ (ISO1183) and a $MFR_2$ (ISO1133, 2.16 kg, 190°C) in the range of from 0.05 to 2.0 g/10min; and
iv) 0.0 wt% to 5 wt%, based on the total weight of the sealing layer (SL), of additives selected from antiblock agents and/or antioxidants,
the total amounts of i) + ii) + iii) + iv) summing up to 100 wt%;
wherein layer (B) comprises:

a) 60.0 wt% to 99.0 wt%, based on the total weight of layer (B) of a multimodal Ziegler-Natta catalysed linear low density polyethylene (znLLDPE) having a density in the range of 920 to 945 kg/m$^3$ (ISO 1183) and an $MFR_5$ (190°C, 5 kg, ISO 1133) in the range of 0.3 to 4.0 g/10 min; and
b) 1.0 wt% to 40.0 wt%, based on the total weight of layer (B), of a second multimodal metallocene catalysed linear low density polyethylene (mLLDPE-2) having a density in the range of 910 to 925 kg/m$^3$ (ISO 1183) and an $MFR_2$ (190°C, 2.16 kg, ISO 1133) in the range of 0.5 to 2.5 g/10 min; the total amounts of a) + b) summing up to 100 wt%.

In an embodiment, the invention provides a multilayered polyethylene film comprising at least a layer (A), being a sealing layer (SL), a layer (B) being a core layer (CL), and a layer (C), being an outer layer (OL), in that order, wherein layer (A) and layer (B) are defined as above and the outer layer (OL) comprises:

x) 70.0 wt% to 99.0 wt%, based on the total weight of the outer layer (OL), of a third multimodal metallocene catalysed linear low density polyethylene (mLLDPE-3) having a density in the range of 910 to 925 kg/m$^3$ (ISO 1183) and an $MFR_2$ (190°C, 2.16 kg, ISO 1133) in the range of 0.5 to 2.5 g/10 min; and
y) 1.0 wt% to 30.0 wt%, based on the total weight of the outer layer (OL), of a low density polyethylene (LDPE), preferably a low density polyethylene produced in a high pressure process, having a density in the range of 910 to 940 kg/m$^3$ (ISO1183) and a $MFR_2$ (ISO1133, 2.16 kg, 190°C) in the range of from 0.05 to 2.0 g/10min, the total amounts of x) + y) summing up to 100 wt%.

In a further embodiment the first multimodal metallocene catalysed linear low density polyethylene (mLLDPE-1) of layer (A), i.e. the sealing layer (SL) consists of an ethylene polymer component (A), which consists of an ethylene polymer fraction (A-1) and an ethylene polymer fraction (A-2), and an ethylene polymer component (B).

## Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise

at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

Ziegler-Natta catalysed linear low density polyethylene (znLLDPE) is defined in this invention as linear low density polyethylene copolymer, which has been produced in the presence of a Ziegler-Natta catalyst.

Term "multimodal" in context of multimodal linear low density polyethylene means herein multimodality with respect to melt flow rate (MFR). The multimodal linear low density polyethylene can have further multimodality with respect to one or more further properties, like density, comonomer type and/or comonomer content, as will be described later below.

The first multimodal metallocene catalysed linear low density polyethylene (mLLDPE-1) used according to the invention as defined above, below or in claims is also referred herein shortly as mLLDPE-1.

The second multimodal metallocene catalysed linear low density polyethylene (mLLDPE-2) used according to the invention as defined above, below or in claims is also referred herein shortly as mLLDPE-2.

The third multimodal metallocene catalysed linear low density polyethylene (mLLDPE-3) used according to the invention as defined above, below or in claims is also referred herein shortly as mLLDPE-3

The multimodal Ziegler-Natta catalysed linear low density polyethylene (znLLDPE) used according to the invention as defined above, below or in claims is also referred herein shortly as znLLDPE.

## Detailed description of Invention

The film of the invention is a multilayered polyethylene film comprising at least layer (A) and layer (B).

The at least two layers (A) and (B) are both composed of polyethylene polymers only, i.e. no other polymer than an ethylene based polymer is present.

In an embodiment of the invention the multilayered polyethylene film comprises at least layer (A), layer (B) and layer (C).

Also layer (C) is composed of polyethylene polymers only.

### *Layer (A), respectively Sealing Layer (SL)*

Layer (A) of the multilayered film of the invention is the sealing layer (SL) and comprises

i) 60.0 wt% to 100 wt%, based on the total weight of the sealing layer (SL), of a first multimodal metallocene catalysed linear low density polyethylene (mLLDPE-1); and

ii) 0.0 wt% to 40wt%, based on the total weight of the sealing layer (SL), of an ethylene-1-octene or ethylene-1-butene plastomer and/or

iii) 0.0 wt% to 20 wt%, based on the total weight of the sealing layer (SL), of a low density polyethylene (LDPE) having a density in the range of 910 to 940 kg/$m^3$ (ISO1183) and a $MFR_2$ (ISO1133, 2.16 kg, 190°C) in the range of from 0.05 to 2.0 g/10min; and

iv) 0.0 wt% to 5 wt%, based on the total weight of the sealing layer (SL), of additives selected from antiblock agents and/or antioxidants,

the total amounts of i) + ii) + iii) + iv) summing up to 100 wt%.

*Ad first multimodal metallocene catalysed linear low density polyethylene (mLLDPE-1)*

The first multimodal metallocene catalysed linear low density polyethylene (mLLDPE-1) has a density (ISO 1183) in the range of 910 to 916 kg/$m^3$, preferably in the range of 911 to 915 kg/$m^3$ and more preferably in the range of 912 to 914 kg/$m^3$.

The $MFR_2$ (190°C, 2.16 kg, ISO 1133) of the first multimodal metallocene catalysed linear low density polyethylene (mLLDPE-1) is in the range of 0.5 to 2.5 g/10 min, preferably 0.8 to 2.0 g/10 min, more preferably 0.9 to 1.5 g/10 min.

The first multimodal metallocene catalysed linear low density polyethylene (mLLDPE-1) may further have a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 28 to 35.

The first multimodal metallocene catalysed linear low density polyethylene (mLLDPE-1) is a copolymer of

ethylene with at least two different comonomers selected from alpha-olefins having from 4 to 10 carbon atoms, e.g. 1-butene, 1-hexene, 1-octene, preferably 1-butene and 1-hexene.

The total amount of 1-butene, based on the first multimodal metallocene catalysed linear low density polyethylene (mLLDPE-1), is preferably in the range of from 0.1 to 1.0 wt%, preferably 0.2 to 0.8 wt% and more preferably 0.3 to 0.6 wt%.

The total amount of 1-hexene, based on first multimodal metallocene catalysed linear low density polyethylene (mLLDPE-1), preferably is in the range of 2.0 to 20.0 wt%, preferably 4.0 to 18.0 wt% and more preferably 6.0 to 15.0 wt%.

In an embodiment, the first multimodal metallocene catalysed linear low density polyethylene (mLLDPE-1) of layer (A) consists of an ethylene polymer component (A), which consists of an ethylene polymer fraction (A-1) and an ethylene polymer fraction (A-2), and an ethylene polymer component (B).

Preferably, the alpha-olefin comonomer having from 4 to 10 carbon atoms of ethylene polymer component (A) is different from the alpha-olefin comonomer having from 4 to 10 carbon atoms of ethylene polymer component (B), more preferably the alpha-olefin comonomer having from 4 to 10 carbon atoms of ethylene polymer component (A) is selected from 1-butene, 1-hexene and 1-octene, more preferably is 1-butene; and the alpha-olefin comonomer having from 4 to 10 carbon atoms of ethylene polymer component (B) is preferably selected from 1-hexene and 1-octene, more preferably is 1-hexene.

The comonomer type for the polymer fractions (A-1) and (A-2) is the same, thus the same alpha-olefin comonomer having from 4 to 10 carbon atoms is used for fraction (A-1) and (A-2), more preferably both fractions therefore have 1-butene as comonomer.

The total amount (wt%) of 1-butene present in the ethylene polymer component (A) is in the range of 0.5 to 5.0 wt%, preferably of 0.6 to 4.0 wt%, more preferably of 0.8 to 3.0 wt%, even more preferably of 1.0 to 2.0 wt%, based on the ethylene polymer component (A).

The total amount (wt%) of 1-hexene, present in the ethylene polymer component (B) is in the range of 15.0 to 25.0 wt%, preferably of 16.0 to 22.0 wt%, more preferably of 17.0 to 20.0 wt%, based on the ethylene polymer component (B).

The first multimodal metallocene catalysed linear low density polyethylene (mLLDPE-1) is referred herein as "multimodal", since the ethylene polymer component (A), including ethylene polymer fractions (A-1) and (A-2), and ethylene polymer component (B) have been produced under different polymerization conditions resulting in different Melt Flow Rates (MFR, e.g. $MFR_2$). I.e. the first multimodal metallocene catalysed linear low density polyethylene (mLLDPE-1) is multimodal at least with respect to difference in MFR of the ethylene polymer components (A) and (B) as well as of ethylene polymer fractions (A-1) and (A-2).

As stated above the $MFR_2$ of the ethylene polymer fractions (A-1) and (A-2) are different from each other, i.e. ethylene polymer fractions (A-2) has a higher $MFR_2$ than ethylene polymer fractions (A-1) .

The ethylene polymer fraction (A-1) has a $MFR_2$ (190°C, 2.16 kg, ISO 1133) in the range of 1.0 to 10.0 g/10 min, preferably of 1.5 to 9.0 g/10 min, more preferably of 2.0 to 8.5 g/10 min and even more preferably of 2.5 to 8.0 g/10 min, like 3.0 to 6.0 g/10 min.

The ethylene polymer fraction (A-2) preferably has a $MFR_2$ (190°C, 2.16 kg, ISO 1133) higher than the ethylene polymer fraction (A-1), i.e. has an $MFR_2$ in the range of 3.0 to 30.0 g/10 min, preferably of 3.2 to 20.0 g/10 min, more preferably of 3.5 to 15.0 g/10 min, like 3.5 to 10.0 g/10 min.

The $MFR_2$ of the ethylene polymer components (A) and (B) are also different from each other. The ethylene polymer component (A) has a $MFR_2$ in the range of 2.0 to 30 g/10 min, preferably of 2.5 to 20 g/10 min, more preferably of 3.0 to 15 g/10 min and even more preferably of 3.2 to 10 g/10 min.

The ethylene polymer component (B) has a $MFR_2$ in the range of 0.01 to 1.5 g/10 min, preferably of 0.05 to 1.2 g/10 min, more preferably of 0.1 to 1.0 g/10 min and even more preferably of 0.2 to 0.8 g/10 min.

In an embodiment of the invention it is preferred the ratio of the $MFR_2$ of ethylene polymer component (A) to the $MFR_2$ of the final mLLDPE-1 is at least 2.5 to 20.0, preferably 3.0 to 15.0 and more preferably of 3.5 to 10.0.

Naturally, in addition to multimodality with respect to, i.e. difference between, the $MFR_2$ of ethylene polymer components (A) and (B) as well as of ethylene polymer fractions (A-1) and (A-2), the mLLDPE-1 of the invention can also be multimodal e.g. with respect to one or both of the two further properties:
multimodality with respect to, i.e. difference between,

- the comonomer type and/or content(s) present in the ethylene polymer components (A) and (B); and/or
- the density of the ethylene polymer components (A) and (B).

Even more preferably the mLLDPE-1 used according the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 kg/$m^3$, preferably of 925 to

950 kg/m$^3$, more preferably 930 to 945 kg/m$^3$ and/or the density of the ethylene polymer component (B) is in the range of 880 to 915 kg/m$^3$, preferably of 890 to 905 kg/m$^3$.

The polymer fractions (A-1) has a density in the range of from 920 to 960 kg/m$^3$, preferably of 925 to 955 kg/m$^3$, more preferably of 930 to 950 kg/m$^3$, like 935 to 945 kg/m$^3$.

The density of the polymer fraction (A-2) is in the range of from 930 to 950 kg/m$^3$, preferably of 935 to 945 kg/m$^3$.

The density of polymer fractions (A-1) and (A-2) may be the same or may be different.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the mLLDPE-1, preferably in an amount of 32.0 to 55.0 wt% and even more preferably in an amount of 34.0 to 45.0 wt%.

Thus, the ethylene polymer component (B) is present in an amount of 70.0 to 30.0 wt% based on the mLLDPE-1, preferably in an amount of 68.0 to 45.0 wt% and more preferably in an amount of 66.0 to 55.0 wt%.

The mLLDPE-1 can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce the mLLDPE-1. In this case, the reaction conditions in the two slurry reactors are chosen in a way that in the two slurry reactors different products in view of MFR and/or density are produced.

Such a process is described inter alia in WO 2016/198273, WO 2021/009189, WO 2021/009190, WO 2021/009191 and WO 2021/009192. Full details of how to prepare suitable mLLDPE-1 can be found in these references.

A suitable process is the Borstar PE 3G process.

The mLLDPE-1 used according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases, it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final mLLDPE-1. This can counted as part of the first ethylene polymer component (A).

*Catalyst*

The mLLDPE-1 used according to the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

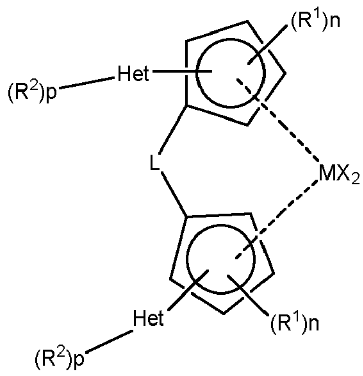

(I)

wherein each X is independently a halogen atom, a $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group; each R is $C_{1-10}$-alkyl or phenyl group optionally substituted by 1 to 3 $C_{1-6}$-alkyl groups; and each p is 0 to 1.

Preferably, the compound of formula (I) has the structure

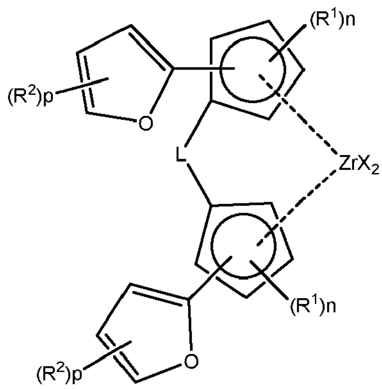

(I´)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

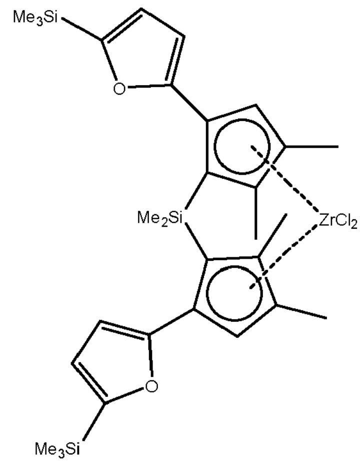

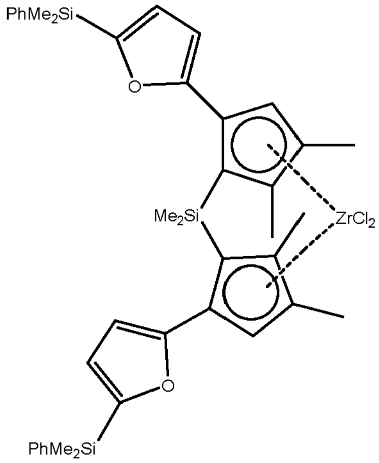

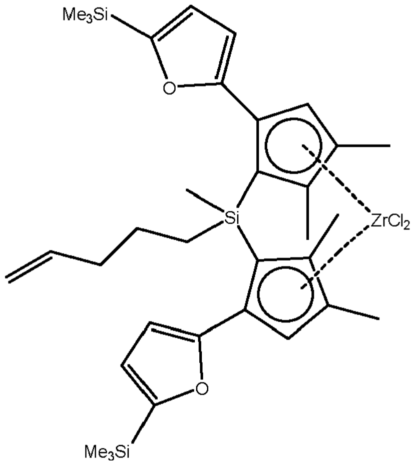

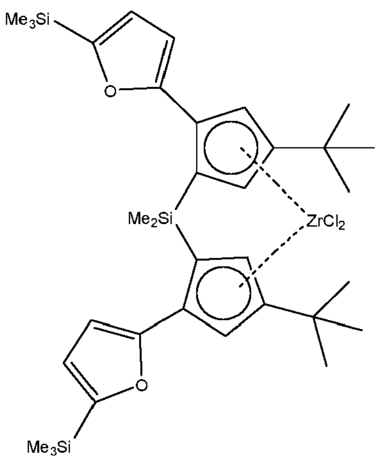

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the mLLDPE-1 are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The mLLDPE-1 may optional contain additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

*Ad ethylene-1-octene or ethylene-1-butene plastomer*

The ethylene-1-octene or ethylene-1-butene plastomer has a density (ISO1183) in the range of 860 to 910 kg/m$^3$, preferably of 870 to 908 kg/m$^3$, more preferably 880 to 905 kg/m$^3$.

The $MFR_2$ (190°C, 2.16 kg, ISO 1133) of the plastomer is in the range of 0.5 to 10.0 g/10 min, preferably 0.8 to 8.0 g/10 min, more preferably 0.9 to 5.0 g/10 min, like 0.9 to 3.5 g/10min. Preferred plastomers are ethylene-1-octene plastomers.

The content of comonomer, such as 1-octene, in the plastomer may be in the range of 5.0 to 40.0 wt%, such as 12.0 to 30.0 wt%.

The molecular mass distribution Mw/Mn of suitable plastomers is most often below 4, such as 3.8 or below, but is at least 2.0. It is preferably between 3.7 and 2.1.

Suitable ethylene-1-butene or ethylene-1-octene plastomers can be any copolymer of ethylene and 1-butene or 1-octene having the above defined properties, which are commercial available, i.a. from Borealis under the tradename Queo, from DOW Chemical Corp (USA) under the tradename Engage or Affinity, or from Mitsui Chemicals under the tradename Tafmer.

Alternatively, these plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons. Plastomers of the invention are ideally formed using metallocene type catalysts.

Preferably, these plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably, the solution polymerization process is a high temperature solution polymerization process, using a polymerization temperature of higher than 100°C. More preferably the polymerization temperature is at least 110°C, more preferably at least 150°C. The polymerization temperature can be up to 250°C.

The pressure in such a solution polymerization process is preferably in a range of 10 to 100 bar, preferably 15 to 100 bar and more preferably 20 to 100 bar. The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the Borceed™ technology.

*Ad low density polyethylene (LDPE)*

The optional LDPE has a density in the range of 910 to 940 kg/m$^3$ (ISO1183) and a MFR$_2$ (ISO1133, 2.16 kg, 190°C) in the range of from 0.05 to 2.0 g/10min.

The low density polyethylene (LDPE) is preferably a low density polyethylene produced in a high pressure process.

Such LDPEs are well known in the art and they typically contain long chain branching which differentiates LDPEs from linear low-density polyethylenes, LLDPEs.

The LDPE preferably has a density (ISO1183) in the range of 912 to 938 kg/m$^3$, more preferably in the range of 914 to 935 kg/m$^3$, still more preferably in the range of 915 to 925 kg/m$^3$.

Further it is preferred that the LDPE has a melt flow rate MFR$_2$ (ISO1133, 2.16 kg, 190°C) in the range of from 0.08 to 1.9 g/10min, more preferably in the range of from 0.10 to 1.8 g/10min, and even more preferably in the range of from 0.15 to 1.5 g/10 min.

The Tm (DSC, ISO 11357-3) of the LDPE is preferably in the range of 70-180°C, more preferably 90-140°C, e.g. about 110-120°C.

LDPEs suitable for layer (A) are any conventional LDPEs, e.g. commercially known LDPEs, or they may be prepared according to any conventional high-pressure polymerization (HP) process in a tubular or autoclave reactor using a free radical formation. Such HP processes are very well known in the field of polymer chemistry.

Typical pressures are from 1000 to 3000 bar. The polymerization temperature is preferably in the range of 150 - 350°C. The free radical initiators are commonly known, e.g. organic peroxide based initiators.

Suitable LDPE's are available commercially from Borealis, Basell, Exxon, Sabic, or other suppliers.

The sealing layer thus comprises at least 60.0 wt% to 100 wt% of the first multimodal metallocene catalysed linear low density polyethylene (mLLDPE-1) and 0.0 to 40.0 wt% of the ethylene-1-butene or ethylene-1-octene plastomer and/or 0.0 to 20.0 wt% of low density polyethylene (LDPE) and 0.0 to 5.0 wt% of and additives selected from antiblock agents and/or antioxidants. The wt% values for these components are relative to the total weight of the sealing layer. The total amounts sum up to 100 wt%.

Preferably, the mLLDPE-1 of the seal layer is present in an amount of 65.0 wt% to 100 wt%, more preferably in an amount of 68.0 wt% to 100 wt%, based on the total weight of the sealing layer.

Thus, the plastomer preferably being present in an amount of 0.0 to 35.0 wt%, more preferably of 0.0 to 32 wt%.

In addition or alternatively to the plastomer the LDPE may be present in an amount of 0.0 to 18.0 wt%, more preferably of 0.0 to 15.0 wt%.

In case additives iv) are added to the sealing layer (SL) it is preferred to add both additives, i.e. a slip agent as

well as an antiblock agent, in a total amount of up to 5.0 wt%, based on the total weight of the sealing layer.

***Layer (B), respectively Core Layer (CL)***

Layer (B) of the multilayered film of the invention comprises

a) 60.0 wt% to 99.0 wt%, based on the total weight of layer (B) of a multimodal Ziegler-Natta catalysed linear low density polyethylene (znLLDPE) having a density in the range of 920 to 945 kg/$m^3$ (ISO 1183) and an $MFR_5$ (190°C, 5 kg, ISO 1133) in the range of 0.3 to 4.0 g/10 min; and
b) 1.0 wt% to 40.0 wt%, based on the total weight of layer (B), of a second multimodal metallocene catalysed linear low density polyethylene (mLLDPE-2) having a density in the range of 910 to 925 kg/$m^3$ (ISO 1183) and an MFR2 (190°C, 2.16 kg, ISO 1133) in the range of 0.5 to 2.5 g/10 min.

The total amounts of a) and b) sum up to 100 wt%.
Preferably, layer (B) consists of the znLLDPE and the mLLDPE-2.
Preferably, the znLLDPE is present in layer (B) in an amount of 65.0 to 95.0 wt%, more preferably of 70.0 to 90.0 wt% and even more preferably of 75.0 to 85.0 wt%, based on the total weight of layer (B).
Thus, the mLLDPE-2 is present in layer (B) in an amount of 5.0 to 35.0 wt%, more preferably of 10.0 to 30.0 wt% and even more preferably of 15.0 to 25.0 wt%, based on the total weight of layer (B).
In case that the multilayered film according to the present invention also comprises layer (C), being an outer layer (OL), layer (B) is the core layer (CL) and is located between layer (A) and layer (C).

*Ad multimodal Ziegler-Natta catalysed linear low density polyethylene (znLLDPE)*

The multimodal Ziegler-Natta catalysed linear low density polyethylene (znLLDPE) has a density (ISO 1183) in the range of 920 to 945 kg/$m^3$, preferably of 925 to 942 kg/$m^3$, more preferably of 928 to 940 kg/$m^3$, like 930 to 938 kg/$m^3$.
The $MFR_5$ (190°C, 5 kg, ISO 1133) of the znLLDPE is in the range of 0.3 to 4.0 g/10 min, preferably of 0.5 to 3.0 g/10 min, more preferably of 0.7 to 2.5 g/10 min, like 0.8 to 2.2 g/10 min.
The znLLDPE contains at least one or two comonomer(s). Suitable comonomers are $C_3$-$C_{10}$ alpha-olefin comonomers.
Thus, the znLLDPE can be a copolymer of ethylene and one $C_3$-$C_{10}$ alpha-olefin comonomer or a terpolymer of ethylene and two different $C_3$-$C_{10}$ alpha-olefin comonomers.
Preferably, the comonomers are selected from the group of 1-butene, 1-hexene and 1-octene. It is preferred if the comonomer employed is 1-butene and/or 1-hexene.
More preferred are terpolymers comprising 1-butene and 1-hexene comonomers.
The total comonomer content of the znLLDPE is preferably in the range of 0.3 to 7.0 mol%, more preferably of 0.6 to 4.5 mol% and even more preferably of 1.5 to 3.5 mol%.
1-butene is preferably present in an amount of 0.1 to 3.0 mol%, more preferably of 0.2 to 2.0 mol%, and even more preferably of 0.3 to 1.5 mol% and 1-hexene is present in an amount of 0.2 to 4.0 mol%, more preferably of 0.4 to 2.5 mol% and even more preferably of 0.7 to 2.0 mol%.
In one embodiment of the multilayered film according to the invention, the znLLDPE for layer (B), respectively the core layer (CL), comprises

(A-1) a lower molecular weight (LMW) homopolymer of ethylene and
(A-2) a higher molecular weight (HMW) terpolymer of ethylene, 1-butene and 1-hexene. The LMW homopolymer fraction (A-1) has a lower molecular weight than the HMW terpolymer fraction (A-2).

The lower molecular weight fraction (A-1) of the znLLDPE has a melt index $MFR_2$ according to ISO 1133 (190°C) in the range of 200 to 800 g/10min, preferably of 300 to 600 g/10min; a density according to ISO 1183 in the range of 940 to 980 kg/$m^3$, preferably 945 to 975 kg/$m^3$ and a comonomer content in the range of 0 to 2.5 mol%, preferably 0 to 2 mol%.
The amount of the lower molecular weight fraction (A-1) of the znLLDPE is in the range of 30 to 60 wt%, preferably 35 to 50 wt% and more preferably 35 to 45 wt%.
The expression "homopolymer of ethylene" used herein refers to a polyethylene that consists substantially, i.e. to at least 98.0 wt%, preferably at least 99.0 wt% and more preferably at least 99.5 wt% by weight, like at least 99.8 wt% of ethylene.
The higher molecular weight fraction (A-2) has a lower $MFR_2$ and a lower density than the lower molecular weight fraction (A-1).

Preferably, the znLLDPE is produced in a multi-stage, e.g. two-stage, polymerization using the same Ziegler-Natta catalyst in all stages. Thus, two slurry reactors or two gas phase reactors could be employed. More preferably however, the znLLDPE is made using a slurry polymerization in a loop reactor followed by a gas phase polymerization in a gas phase reactor.

A loop reactor - gas phase reactor system is well known as Borealis technology, i.e. a BORSTAR® reactor system.

The znLLDPE is thus preferably formed in a two-stage process comprising a first slurry loop polymerization followed by gas phase polymerization in the presence of a Ziegler-Natta catalyst.

Preferably, the lower molecular weight fraction (A-1) is produced in a continuously operating loop reactor where ethylene is polymerized in the presence of a Ziegler-Natta catalyst and the higher molecular weight fraction (A-2) is then formed in a gas phase reactor using the same Ziegler-Natta catalyst.

Such znLLDPEs are known in the state of the art and are described e.g. in WO 03/066698 or WO 2008/034630 or are commercially available, such as BorShape™ FX1001 and BorShape™ FX1002 (both from Borealis AG).

Additionally the znLLDPE, preferably the znLLDPE terpolymer may also contain antioxidants, process stabilizers, slip agents, pigments, UV-stabilizers and other additives known in the art.

The znLLDPE is present in layer (B) in an amount of 60.0 wt% to 99.0 wt%, based on the total weight of layer (B), preferably of 65.0 wt% to 95.0 wt%, more preferably of 70.0 wt% to 90.0 wt% and even more preferably of 75.0 wt% to 85 wt%.

*Ad second multimodal metallocene catalysed linear low density polyethylene (mLLDPE-2)*

The second multimodal metallocene catalysed linear low density polyethylene (mLLDPE-2) has a density (ISO 1183) in the range of 910 to 925 kg/m$^3$, preferably of 912 to 922 kg/m$^3$, more preferably of 915 to 920 kg/m$^3$.

The $MFR_2$ (190°C, 2.16 kg, ISO 1133) of the mLLDPE-2 is in the range of 0.5 to 2.5 g/10 min, preferably of 0.8 to 2.0 g/10 min and more preferably of 1.0 to 1.8 g/10 min.

In an embodiment the mLLDPE-2 has a melt flow ratio$MFR_{21}$/ $MFR_2$ of 13 to 40, preferably of 15 to 35, more preferably of 18 to 32.

The second multimodal metallocene catalysed linear low density polyethylene (mLLDPE-2) of use in the core layer typically comprises a lower molecular weight (LMW) component and a higher molecular weight (HMW) component.

The second multimodal metallocene catalysed linear low density polyethylene (mLLDPE-2) of use in the core layer must comprise two comonomers, thus being a multimodal LLDPE terpolymer. These may be present in the HMW component, i.e. it is a terpolymer component or the comonomers may be spread across both components. Furthermore, in case that the HMW component is a terpolymer, the lower molecular weight (LMW) component can be an ethylene homopolymer. In this case, the multimodal mLLDPE-2 is still a multimodal LLDPE terpolymer.

The second multimodal metallocene catalysed linear low density polyethylene (mLLDPE-2) of the invention may therefore be one in which the HMW component comprises repeat units deriving from ethylene and at least two $C_{4-12}$ alpha olefin monomers, such as 1-butene and one $C_{6-12}$ alpha olefin monomer. Ethylene preferably forms the majority of the LMW or HMW component.

Alternatively, both LMW and HMW components are copolymers of ethylene and at least one $C_{4-12}$ alpha olefin monomer such that the overall mLLDPE-2 comprises at least two $C_{4-12}$ alpha olefin monomers.

The overall comonomer content of the mLLDPE-2 may be for example 0.5 to 8.0 % by mol, preferably 0.7 to 6.5 % by mol, more preferably 1.0 to 4.5 % by mol and most preferably 1.5 to 4.0 % by mol.

1-Butene may be present in an amount of 0.10 to 2.5 % by mol, such as 0.22 to 2.0 % by mol, more preferably 0.25 to 1.5 % by mol and most preferably 0.25 to 1.0 % by mol.

The $C_6$ to $C_{12}$ alpha olefin may be present in an amount of 0.3 to 5.5 % by mol, preferably 0.4 to 4.5 % by mol, more preferably 0.7 to 4.0 % by mol and most preferably 1.0 to 3.5 % by mol, especially 1.5 to 3.0 % by mol.

A preferred $C_6$ to $C_{12}$ alpha olefin is 1-hexene.

In a preferred embodiment, the m LLDPE-2 may comprise two ethylene copolymers such that there are at least two $C_{4-12}$ alpha olefin comonomers present, e.g. such as an ethylene-1-butene copolymer (e.g. as the LMW component) and an ethylene-1-hexene copolymer (e.g. as the HMW component).

It would also be possible to combine an ethylene copolymer component and an ethylene terpolymer component such that there are at least two $C_{4-12}$ alpha olefin comonomers present, e.g. an ethylene-1-butene copolymer (e.g. as the LMW component) and an ethylene-1-butene-1-hexene terpolymer (e.g. as the HMW component).

A suitable mLLDPE-2 preferably has:

(i) as a lower molecular weight (LMW) component an ethylene polymer component having an $MFR_2$ of 1.0 to 10.0 g/10 min (according to ISO 1133 at 190°C under 2.16 kg load) and

(ii) as a higher molecular weight (HMW) component an ethylene polymer component having an $MFR_2$ of 0.2 to 2.5

g/10 min (according to ISO 1133 at 190°C under 2.16 kg load), and whereby the density of ethylene polymer component (i) is higher than the density of the ethylene polymer component (ii); the density of the ethylene polymer component (i) being in the range of 930 to 950 kg/$m^3$.

The HMW component of the mLLDPE-2 may for example preferably have an $MFR_2$ of less than 1.0 g/10 min, preferably less than 0.9 g/10 min, especially less than 0.8 g/10min. It may have a density of less than 915 kg/m3, e.g. less than 910 kg/$m^3$, preferably less than 905 kg/$m^3$.

The mLLDPE-2 is formed using a metallocene catalyst.

A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

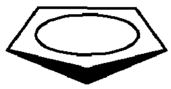

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

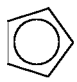
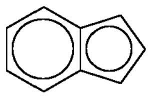

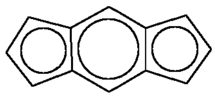
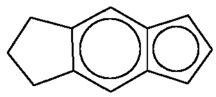

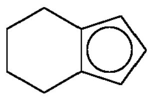

which can obviously be substituted. The metallocene complex preferably does not comprise a single cyclopentadienyl type ligand. Preferably, two such cyclopentadienyl type ligands are present, optionally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis-cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment, the metallocene complex is a compound of formula (II)

$$(L)_mR_nMX_q \qquad (II)$$

wherein

"M" is a transition metal (M) transition metal (M) of Group 3 to 10 of the Periodic Table (IUPAC 2007),

each "X" is independently a monoanionic ligand, such as a σ-ligand,

each "L" is independently an organic ligand which coordinates to the transition metal "M", "R" is a bridging group linking said organic ligands (L),

"m" is 1, 2 or 3, preferably 2

"n" is 0, 1 or 2, preferably 0 or 1,

"q" is 1, 2 or 3, preferably 2 and

m+q is equal to the valence of the transition metal (M).
"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably, the organometallic compound (C) is a metallocene complex, which comprises a transition metal compound, as defined above, which contains a cyclopentadienyl, indenyl or fluorenyl ligand as the substituent "L". Further, the ligands "L" may have one or more substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

In an embodiment of the invention the metallocene complex is bis(1-methyl-3-n-butylcyclopentadienyl) zirconium (IV) chloride.

In a further embodiment the mLLDPE-2 can also be produced in the presence of a metallocene complex of formula (I), as described for mLLDPE-1.

The mLLDPE-2 can in general be made by mechanical blending two or more, separately prepared polymer components or, preferably, by in-situ blending in a multistage polymerization process during the preparation process of the polymer components. Both mechanical and in-situ blending are well-known in the field.

Accordingly, preferred mLLDPE-2s are prepared by in-situ blending in a multistage, i.e. two or more stage, polymerization.

Preferably, the mLLDPE-2 is produced in an at least two-stage polymerization using the same metallocene catalyst.

Thus, for example two slurry reactors or two gas phase reactors, or any combinations thereof, in any order can be employed. Preferably however, the mLLDPE-2 is made using a slurry polymerization in a loop reactor followed by a gas phase polymerization in a gas phase reactor.

A loop reactor - gas phase reactor system is marketed by Borealis as a BORSTAR technology.

Suitable mLLDPE-2s are for example also known in the art. Reference is made in this regard for Example to EP 3 257 895 A1, example IE1 of EP 3 257 895 A1 or WO2020/136166, e.g. the 2nd second bimodal terpolymer or WO 2019/081611, Example 3.

An example of such a mLLDPE-2 is Anteo™ FK1820 or FK1828, which are bimodal ethylene/1-butene/1-hexene terpolymers with a density of 918 kg/$m^3$ and an $MFR_2$ of 1.5 g/10min and which are commercially available from Borouge.

***Layer (C), respectively outer layer (OL)***

In an embodiment, the invention provides a multilayered polyethylene film comprising at least a layer (A), being a sealing layer (SL), a layer (B) being a core layer (CL), and a layer (C), being an outer layer (OL), in that order, wherein layer (A) and layer (B) are defined as above and the outer layer (OL) comprises:

x) 70.0 wt% to 99.0 wt%, based on the total weight of the outer layer (OL), of a third multimodal metallocene catalysed linear low density polyethylene (mLLDPE-3) having a density in the range of 910 to 925 kg/$m^3$ (ISO 1183) and an $MFR_2$ (190°C, 2.16 kg, ISO 1133) in the range of 0.5 to 2.5 g/10 min; and
y) 1.0 wt% to 30.0 wt%, based on the total weight of the outer layer (OL), of a low density polyethylene (LDPE), preferably a low density polyethylene produced in a high pressure process, having a density in the range of 910 to 940 kg/$m^3$ (ISO1183) and a $MFR_2$ (ISO1133, 2.16 kg, 190°C) in the range of from 0.05 to 2.0 g/10min.

The total amounts of x) and y) sum up to 100 wt%.

Preferably, layer (C) consists of the mLLDPE-3 and the LDPE.

Preferably, the mLLDPE-3 is present in layer (C) in an amount of 75.0 to 97.0 wt%, more preferably of 80.0 to 95.0 wt% and even more preferably of 85.0 to 92.0 wt%, based on the total weight of layer (C).

Thus, the LDPE is preferably present in layer (C) in an amount of 3.0 to 25.0 wt%, more preferably of 5.0 to 20.0 wt% and even more preferably of 8.0 to 15.0 wt%, based on the total weight of layer (C).

*Ad third multimodal metallocene catalysed linear low density polyethylene (mLLDPE-3)*

The mLLDPE-3 of the optional outer layer (OL) can be a multimodal metallocene catalysed linear low density polyethylene as defined for the sealing layer (SL), thus can be a mLLDPE-1.

In another embodiment the mLLDPE-3 of the optional outer layer (OL) can be a multimodal metallocene catalysed linear low density polyethylene as defined for layer (B), respectively the core layer (CL), thus can be a mLLDPE-2.

*Ad low density polyethylene (LDPE)*

The LDPE usable in layer (C) of present invention is in principal not limited.

Preferably a LDPE as defined for Layer (A) is used for layer (C).

**Multilayer film**

The multilayered polyethylene film of the present invention comprises at least a layer (A), being a sealing layer (SL), and a layer (B).

In an embodiment, the invention provides a multilayered polyethylene film comprising at least a layer (A), being a sealing layer (SL), a layer (B) being a core layer (CL), and a layer (C), being an outer layer (OL), in that order.

Preferably, the multilayered film according to this invention consists of layer (A), being a sealing layer (SL), layer (B) being a core layer (CL), and layer (C), being an outer layer (OL)

The core layer (CL) is sandwiched between the outer layer (OL) and the sealing layer (SL). The core layer (CL) is preferably in direct contact with the outer layer (OL). The core layer (CL) is preferably in direct contact with the sealing layer (SL). The core layer (CL) is preferably in direct contact with the sealing layer (SL) and outer layer (OL).

Thus, the preferred film structure is SL/CL/OL respectively A/B/C.

The multilayered films of the invention can be prepared using blown extrusion techniques that are well known in the art. An appropriate blend of the components required for each layer can be blended and coextruded. It will be appreciated that any layer of the film of the invention may also contain standard polymer additives if required.

The multilayered films of the invention may have a thickness of 20 to 120 $\mu$m, preferably 30 to 100 $\mu$m and more preferably 40 to 80 $\mu$m. Films of the invention are preferably not stretched in the machine or transverse or biaxial direction.

For the three-layer structure, the sealing layer (SL), the outer layer (OL) and the core layer (CL) may all be of equal thickness or alternatively the core layer (CL) may be thicker than the outer layer (OL) and the sealing layer (SL).

A convenient film comprises an outer (OL) and a sealing layer (SL), each forming 10.0 to 35.0%, preferably 15.0 to 30.0%, more preferably 18.0 to 25.0% of the total final thickness of the 3-layered film, the core layer (CL) forming the remaining thickness, e.g. 30.0 to 80.0%, preferably 40.0 to 70.0%, more preferably 50.0 to 64.0% of the total final thickness of the 3-layered film.

The total thickness of the film is 100%, thus the sum of the individual layers has to be 100%.

The films of the invention are characterized by a sealing initiation temperature (SIT) determined as described in the experimental part on a 3-layered blown film with a thickness of 60 $\mu$m of below 76°C, preferably in the range of 60 to 75°C, more preferably in the range of 63°C to 74°C, and even more preferably in the range of 65°C to 73°C.

In an embodiment of the invention the multilayered films have a hot tack temperature (HTT) of less than 90°C, when measured according to ASTM F 1921 - 98 method B on a three-layered blown film sample (60 $\mu$m thickness).

Preferably, the hot tack temperature (HTT) is in the range of 65 to 88°C, more preferably in the range of 70 to 87°C and even more preferably in the range of 75 to 86°C.

Furthermore, the multilayered films additionally or alternatively have a hot tack force (maximum Hot tack force) of at least 5.6 N or more, when measured according to ASTM F 1921 - 98 (2004), method B on a three-layered blown film sample (60 $\mu$m thickness). Preferably, the hot tack force (HTF) is in the range of 5.6 N up to 15.0 N, more preferably in the range of 5.8 to 12.0 N and even more preferably in the range of 6.0 to 10.0 N.

In another embodiment, the films of the invention are additionally characterized by a dart-drop impact strength (DDI) determined according to ASTM D1709, method A on a 60 $\mu$m 3-layered test blown film of at least 500 g up to 1000 g , preferably 520 g up to 800 g and more preferably 550 g up to 700 g.

In yet another embodiment the multilayered films according to the present invention are characterized by having at least

a) a sealing initiation temperature (SIT) determined as described in the experimental part on a 3-layered blown film with a thickness of 60 $\mu$m of below 76°C, preferably in the range of 60 to 75°C, more preferably in the range of 63°C to 74°C, and even more preferably in the range of 65°C to 73°C,

and having one, two or three of the following parameters b) to d)

b) a hot tack temperature (HTT) of less than 90°C, when measured according to ASTM F 1921 - 98, method B on a three-layered blown film sample (60 $\mu$m thickness), preferably a hot tack temperature (HTT) in the range of 65 to 88°C, more preferably in the range of 70 to 87°C and even more preferably in the range of 75 to 86°C,

c) a hot tack force (maximum Hot tack force) of at least 5.6 N or more, when measured according to ASTM F 1921 - 98 (2004), method B on a three-layered blown film sample (60 $\mu$m thickness), preferably a hot tack force in the range of 5.6 N up to 15.0 N, more preferably in the range of 5.8 to 12.0 N and even more preferably in the range of 6.0 to 10.0 N,

d) a dart-drop impact strength (DDI) determined according to ASTM D1709, method A on a 60 μm 3-layered test blown film of at least 500 g up to 1000 g , preferably 520 g up to 800 g and more preferably 550 g up to 700 g.

Preferably, the multilayered films according to the present invention are characterized by having at least parameters a) and b), or at least parameters a) and c), or at least parameters a) and b) and c).

The inventive multilayered films are fully recyclable and thus improves sustainability, as it is a "100% PE" solution with no other polymer than ethylene based polymers being present.

Multilayered films according to the present invention are highly useful for being used in various packaging applications, wherein applications related to food packaging are preferred.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1-x) \cdot logC$$

$$C = 10^{\wedge}\frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (P)
X = weight fraction of Component (A)

For Fraction (A-2):

B = $MFR_2$ of 1$^{st}$ fraction (A-1)
C = $MFR_2$ of 2$^{nd}$ fraction (A-2)
A = final $MFR_2$ (mixture) of loop polymer (= Component (A))
X = weight fraction of the 1$^{st}$ fraction (A-1)

**Density**

Density of the polymer was measured according to ASTM; D792, Method B (density by balance at 23°C) on compression moulded specimen prepared according to EN ISO 1872-2 (February 2007) and is given in $kg/m^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Advance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the $_*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha$B4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta$B4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of ≥ 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 40 μm thickness with the following further parameters:

Conditioning time: > 96 h
Specimen width: 25 mm
Sealing pressure: 0.4 N/mm$^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Hot Tack temperature** (lowest temperature to get maximum Hot tack force) and **Hot tack** (maximum Hot tack force) were measured according to ASTM F 1921 method B on a three-layer blown film of 60μm thickness with below settings:

Q-name instrument: Hot Tack - Sealing Tester
Model: J&B model 4000 MB
Sealbar length: 50 [mm]
Seal bar width: 5 [mm]
Seal bar shape: flat
Seal Pressure: 0.15 N/mm$^2$
Seal Time: 1s
Coating of sealing bars: NIPTEF ®
Roughness of coating sealing bars: 1 [μm]

Film Specimen width: 25 mm
Cool time: 0.2 s
Peel Speed: 200 mm/s
Start temperature: 50 °C
End temperature: burn through and/or shrinking
Increments: 5 °C

All film test specimens were prepared in standard atmospheres for conditioning and testing at 23 °C (± 2 °C) and 50 % (± 10 %) relative humidity. The minimum conditioning time of test specimen in standard atmosphere just before start testing is at least 40 h. The minimum storage time between extrusion of film sample and start testing is at least 88 h. The hot-tack measurement determines the strength of heat seals formed in the films, immediately after the seal has been made and before it cools to ambient temperature.

The hot-tack force was measured as a function of temperature within the temperature range and with temperature increments as indicated above. The number of test specimens were at least 3 specimens per temperature. The Hot-tack force is evaluated as the highest force (maximum peak value) with failure mode "peel".

**Dart drop strength (DDI): Impact resistance by free-falling dart method**

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

Standard conditions:

Conditioning time: > 96 h
Test temperature: 23 °C
Dart head material: phenolic
Dart diameter: 38 mm
Drop height: 660 mm

Results:

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 60 μm and at a cross head speed of 1 mm/min for the modulus.

**Film sample preparation**

The 3-layer test films consisting of Layers A, B and C and respective comparative 3-layer films of 60 μm thickness were produced on a Dr. Colin 3-Layer Blown film line.

The melt temperature of the sealing layer (A) was 180 to 200°C, the melt temperature of the core layer (B) was in the range of 190°C to 210°C and for the outer layer (C) 200°C. The throughput of the extruders was in sum 10 kg/h.

Further parameters for the blown film line were:

☐ **Die Gap:** 1.5 mm
☐ **Die Size:** 60mm

☐ **BUR:** 1:2.5
☐ **Frost Line Height:** 120 mm

**Examples:**

*Materials used:*

Plastomer:

Queo™ 0201: ethylene based 1-octene plastomer, $MFR_2$ (190°C/2.16kg) of 1.1 g/10 min, unimodal, density 902 kg/$m^3$, Tm 97°C; produced in a solution polymerization process using a metallocene catalyst provided by Borealis AG. It contains processing stabilizers.

Multimodal Ziegler-Natta catalysed linear low density polyethylene (znLLDPE):
FX1001: multimodal alpha-olefin terpolymer commercially available by Borealis AG, with density of 931 kg/$m^3$, a $MFR_5$ (190°C/5 kg) of 0.9 g/10min, Tm 127°C; produced with a Ziegler-Natta catalyst. It contains antioxidant.

Multimodal metallocene catalysed linear low density polyethylene for Layer B and C (mLLDPE-2; mLLDPE-3) and for Layer A of Comparative Examples: Anteo™ FK1820: bimodal ethylene/1-butene/1-hexene terpolymer with a density of 918 kg/$m^3$,
$MFR_2$ (190°C/2.16kg) of 1.5 g/10min, Tm 122°C, produced with a metallocene catalyst; commercially available from Borouge. It contains antioxidant and processing aid.

Low density polyethylene (LDPE):

FT5230: low density polyethylene produced by Tubular Technology (provided by Borealis AG) MFR190/2.16 of 0.75 g/10min and density of 923 kg/$m^3$, Tm 112°C. It contains no additives

FT5236: low density polyethylene produced by Tubular Technology (provided by Borealis AG),
$MFR_2$ of 0.75 g/10 min, density of 923 kg/$m^3$, Tm 112°C. It contains anti-block, antioxidant and slip additives.

***Preparation of multimodal metallocene catalysed linear low density polyethylene for***

***Layer A of the inventive multilayered films (mLLDPE-1)***

**Cat.Example: Catalyst preparation**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

Borstar pilot plant with a 3-reactor set-up (loop1 - loop2 - GPR 1) and a prepolymerization loop reactor. mLLDPE-1 was produced by using the polymerization conditions as given in Table 1.

**Table 1:** Polymerization conditions for mLLDPE-1

| | mLLDPE-1 |
|---|---|
| **Prepoly reactor** | |
| Catalyst feed (g/h) | 35 |
| Temp. (°C) | 50 |
| Press. (kPa) | 5639 |
| C2 (kg/h) | 4.0 |
| H2(g/h) | 0.04 |
| C4 (g/h) | 81.9 |
| Split (wt%) | 3.4 |
| **loop 1 Fraction (A-1)** | |
| Temp. (°C) | 85 |
| Press. (kPa) | 5544 |
| C2 conc. (mol%) | 3.5 |
| H2/C2 ratio (mol/kmol) | 0.41 |
| C4/C2 ratio (mol/kmol) | 41 |
| Split (wt%) | 17.6 |
| Density (kg/m3) of loop 1 material (fraction (A-1)) | 941 |
| MFR2 (g/10 min) of loop 1 material (fraction (A-1)) | 5.0 |
| **loop 2** | |
| Temp. (°C) | 85 |
| Press. (kPa) | 5325 |
| C2 conc. (mol%) | 3.5 |
| H2/C2 ratio (mol/kmol) | 0.6 |
| C4/C2 ratio (mol/kmol) | 29 |
| Split (wt%) | 20.4 |
| Density (kg/m3) after loop 2 (component (A)) | 940.7 |
| MFR2 (g/10 min) after loop 2 (component (A)) | 5.8 |
| MFR2 (g/10 min) of loop 2 material (fraction (A-2)) | 6.8 |
| Density (kg/m3) of loop 2 material (fraction (A-2)) | 941 |
| C4 (wt%) after loop 2 material (Component (A)) | 1.21 |
| **GPR** | |
| Temp. (°C) | 75.0 |
| Press. (kPa) | 2000.0 |
| H2/C2 ratio (mol/kmol) | 1.18 |
| C6/C2 ratio (mol/kmol) | 14.5 |
| Split (wt%) | 58.6 |
| MFR2 (g/10 min) of GPR material (Component (B)) | 0.5 |
| Density (kg/m3) of GPR material (Component (B)) | 891 |
| C6 (wt%) of GPR material Component (B)) | 18.60 |

The polymer was mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of mLLDPE-1

| **Material** | **mLLDPE-1** |
|---|---|
| $MFR_2$ (g/10 min) (final) | 1.3 |
| $MFR_{21}$ (g/10 min) | 38.7 |
| $MFR_{21}/MFR_2$ | 29.8 |
| Density (kg/$m^3$) | 913 |
| C4 (wt%) | 0.5 |
| C6 (wt%) | 10.7 |
| $MFR_2(A)/MFR_2(final)$ | 4.5 |

**Three-layered films**

The following three-layered film structures have been produced with the above described method (film sample preparation).

**Table 3:** Inventive and Comparative Film structures

| Layer/thickness | Polymer | IE1* [wt%] | IE2* [wt%] | IE3* [wt%] | IE4* [wt%] | CE1* [wt%] | CE2* [wt%] |
|---|---|---|---|---|---|---|---|
| Outer layer (OL) /12μm | FK1820 | 90 | 90 | 90 | 90 | 90 | 90 |
| | FT5236 | 10 | 10 | 10 | 10 | 10 | 10 |
| | | | | | | | |
| Core layer (CL)/36μm | FX1001 | 80 | 80 | 80 | 80 | 80 | 80 |
| | FK1820 | 20 | 20 | 20 | 20 | 20 | 20 |
| | | | | | | | |
| Sealing layer (SL)/ 12μm | mLLDPE-1 | 95 | 75 | 67.5 | 85 | - | - |
| | Queo 0201 | - | 20 | 17.5 | - | 60 | - |
| | FK1820 | - | - | - | - | 35 | 95 |
| | FT5230 | - | - | 10 | 10 | - | - |
| | Slip agent | 2.5 | 2.5 | 2.5 | 2.5 | 2.5 | 2.5 |
| | Antiblock | 2.5 | 2.5 | 2.5 | 2.5 | 2.5 | 2.5 |
| * wt% based on the respective layer (OL or CL or SL) | | | | | | | |

**Table 4:** Inventive and Comparative Film structures

| Layer/ thickness | Polymer | IE1** [wt%] | IE2** [wt%] | IE3** [wt%] | IE4* [wt%] | CE1** [wt%] | CE2** [wt%] |
|---|---|---|---|---|---|---|---|
| Outer layer (OL)/ 12μm | FK1820 | 18 | 18 | 18 | 18 | 18 | 18 |
| | FT5236 | 2 | 2 | 2 | 2 | 2 | 2 |
| Core layer (CL)/ 36μm | FX1001 | 48 | 48 | 48 | 48 | 48 | 48 |
| | FK1820 | 12 | 12 | 12 | 12 | 12 | 12 |

(continued)

| Layer/ thickness | Polymer | IE1** [wt%] | IE2** [wt%] | IE3** [wt%] | IE4* [wt%] | CE1** [wt%] | CE2** [wt%] |
|---|---|---|---|---|---|---|---|
| Sealing layer (SL)/ 12μm | mLLDPE-1 | 19 | 14 | 13.5 | 17 | - | - |
| | Queo 0201 | - | 4 | 3.5 | | 12 | - |
| | FK1820 | - | - | - | | 7 | 19 |
| | FT5230 | - | | 2 | 2 | | |
| | Slip agent | 0.5 | 0.5 | 0.5 | 0.5 | 0.5 | 0.5 |
| | Antiblock | 0.5 | 0.5 | 0.5 | 0.5 | 0.5 | 0.5 |
| ** wt% based on the overall 3-layered film | | | | | | | |

Slip Agent: added as masterbatch POLYBATCH® CE-505-E, which is a 5% erucamide slip concentrate in polyethylene. It has $MFR_2$ of 20 g/10min and is commercially available from A. Schulman.

Antiblock: POLYBATCH® FSU-105-E, which is a general purpose erucamide slip and antiblock concentrate in LDPE. It has $MFR_2$ of 13 g/10min and is commercially available from A. Schulman.

In Table 5 the film properties of the inventive and comparative film structures are shown.

**Table 5:** Film properties

| Property | unit | IE1 | IE2 | IE3 | IE4 | CE1 | CE2 |
|---|---|---|---|---|---|---|---|
| TM/MD | MPa | 367 | 361 | 369 | 380 | 362 | 375 |
| TM/TD | MPa | 464 | 465 | 465 | 464 | 462 | 500 |
| DDI | g | 654 | 612 | 592 | 597 | 720 | 781 |
| SIT | °C | 68 | 69 | 72 | 70 | 78 | 85 |
| HTF | N | 7.1 | 8.36 | 6.05 | 6.86 | 5.49 | 3.53 |
| HTT | °C | 79 | 81 | 85 | 80 | 91 | 99 |

The data demonstrates that the seal initiation temperature (SIT), as well as the hot tack temperature (HTT) is reduced for the examples of the invention with an additional improvement of hot tack force (HTF). The data also demonstrates that tensile modulus (TM) is not compromised using the films of the invention.

Thus, although DDI is lower for the inventive films than for the comparative examples, the overall performance has increased significantly.

## Claims

1. Multilayered polyethylene film comprising at least a layer (A), being a sealing layer (SL), and a layer (B), wherein the sealing layer (SL) comprises:

   i) 60.0 wt% to 100 wt%, based on the total weight of the sealing layer (SL), of a first multimodal metallocene catalysed linear low density polyethylene (mLLDPE-1) having a density in the range of 910 to 916 kg/$m^3$ (ISO 1183) and an $MFR_2$ (190°C, 2.16 kg, ISO 1133) in the range of 0.5 to 2.5 g/10 min; and
   ii) 0.0 wt% to 40wt%, based on the total weight of the sealing layer (SL), of an ethylene-1-octene or ethylene-1-butene plastomer having a density in the range of 860 to 910 kg/$m^3$ (ISO1183) and an $MFR_2$ (190°C, 2.16 kg, ISO 1133) in the range of 0.5 to 10.0 g/10 min; and/or
   iii) 0.0 wt% to 20 wt%, based on the total weight of the sealing layer (SL), of a low density polyethylene (LDPE) having a density in the range of 910 to 940 kg/$m^3$ (ISO1183) and a $MFR_2$ (ISO1133, 2.16 kg, 190°C) in the range of from 0.05 to 2.0 g/10min; and
   iv) 0.0 wt% to 5 wt%, based on the total weight of the sealing layer (SL), of additives selected from antiblock

agents and/or antioxidants,
the total amounts of i) + ii) + iii) + iv) summing up to 100 wt%;
wherein layer (B) comprises:

a) 60.0 wt% to 99.0 wt%, based on the total weight of layer (B) of a multimodal Ziegler-Natta catalysed linear low density polyethylene (znLLDPE) having a density in the range of 920 to 945 kg/m$^3$ (ISO 1183) and an $MFR_5$ (190°C, 5 kg, ISO 1133) in the range of 0.3 to 4.0 g/10 min; and
b) 1.0 wt% to 40.0 wt%, based on the total weight of layer (B), of a second multimodal metallocene catalysed linear low density polyethylene (mLLDPE-2) having a density in the range of 910 to 925 kg/m$^3$ (ISO 1183) and an $MFR_2$ (190°C, 2.16 kg, ISO 1133) in the range of 0.5 to 2.5 g/10 min,

the total amounts of a) + b) summing up to 100 wt%.

**2.** Multilayered polyethylene film according to claim 1, wherein the film comprises at least a layer (A), being a sealing layer (SL), a layer (B) being a core layer (CL), and a layer (C), being an outer layer (OL), in that order, wherein layer (A) and layer (B) are defined in claim 1 and the outer layer (OL) comprises:

x) 70.0 wt% to 99.0 wt%, based on the total weight of the outer layer (OL), of a third multimodal metallocene catalysed linear low density polyethylene (mLLDPE-3) having a density in the range of 910 to 925 kg/m$^3$ (ISO 1183) and an $MFR_2$ (190°C, 2.16 kg, ISO 1133) in the range of 0.5 to 2.5 g/10 min; and
y) 1.0 wt% to 30.0 wt%, based on the total weight of the outer layer (OL), of a low density polyethylene (LDPE), preferably a low density polyethylene produced in a high pressure process, having a density in the range of 910 to 940 kg/m$^3$ (ISO1183) and a $MFR_2$ (ISO1133, 2.16 kg, 190°C) in the range of from 0.05 to 2.0 g/10min,

the total amounts of a) + b) summing up to 100 wt%.

**3.** Multilayered polyethylene film according to claim 1 or 2, wherein the first multimodal metallocene catalysed linear low density polyethylene (mLLDPE-1) of layer (A), i.e. the sealing layer (SL) consists of an ethylene polymer component (A), which consists of an ethylene polymer fraction (A-1) and an ethylene polymer fraction (A-2), and an ethylene polymer component (B) and/or has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 28 to 35.

**4.** Multilayered polyethylene film according to any of the preceding claims 1 to 3, wherein the first multimodal metallocene catalysed linear low density polyethylene (mLLDPE-1) is a copolymer of ethylene with 1-butene and 1-hexene, whereby
the total amount of 1-butene, based on the first multimodal metallocene catalysed linear low density polyethylene (mLLDPE-1), is preferably in the range of from 0.1 to 1.0 wt%, preferably 0.2 to 0.8 wt% and more preferably 0.3 to 0.6 wt% and
the total amount of 1-hexene, based on first multimodal metallocene catalysed linear low density polyethylene (mLLDPE-1), preferably is in the range of 2.0 to 20.0 wt%, preferably 4.0 to 18.0 wt% and more preferably 6.0 to 15.0 wt%.

**5.** Multilayered polyethylene film according to any of the preceding claims 3 to 4, wherein in the first multimodal metallocene catalysed linear low density polyethylene (mLLDPE-1) the total amount (wt%) of 1-butene present in the ethylene polymer component (A) is in the range of 0.5 to 5.0 wt%, preferably of 0.6 to 4.0 wt%, more preferably of 0.8 to 3.0 wt%, even more preferably of 1.0 to 2.0 wt%, based on the ethylene polymer component (A) and
the total amount (wt%) of 1-hexene, present in the ethylene polymer component (B) is in the range of 15.0 to 25.0 wt%, preferably of 16.0 to 22.0 wt%, more preferably of 17.0 to 20.0 wt%, based on the ethylene polymer component (B).

**6.** Multilayered polyethylene film according to any of the preceding claims 1 to 5, wherein the multimodal Ziegler-Natta catalysed linear low density polyethylene (znLLDPE) comprises

(A-1) a lower molecular weight (LMW) homopolymer of ethylene and
(A-2) a higher molecular weight (HMW) terpolymer of ethylene, 1-butene and 1-hexene wherein the LMW homopolymer fraction (A-1) has a lower molecular weight than the HMW terpolymer fraction (A-2) and
the lower molecular weight fraction (A-1) of the znLLDPE has a melt index $MFR_2$ according to ISO 1133 (190°C) in the range of 200 to 800 g/10min, preferably of 300 to 600 g/10min; a density according to ISO 1183 in the

range of 940 to 980 kg/$m^3$, preferably 945 to 975 kg/$m^3$ and a comonomer content in the range of 0 to 2.5 mol%, preferably 0 to 2 mol% and the higher molecular weight fraction (A-2) has a lower $MFR_2$ and a lower density than the lower molecular weight fraction (A-1).

**7.** Multilayered polyethylene film according to any of the preceding claims 1 to 6, wherein the second multimodal metallocene catalysed linear low density polyethylene (mLLDPE-2) has a melt flow ratio$MFR_{21}$/ $MFR_2$ of 13 to 40, preferably of 15 to 35, more preferably of 18 to 32, 13 to 28, preferably of 15 to 28, more preferably of 15 to 25 and comprises a lower molecular weight (LMW) component and a higher molecular weight (HMW) component, whereby

(i) the lower molecular weight (LMW) component is an ethylene polymer component having an $MFR_2$ of 1.0 to 10.0 g/10 min (according to ISO 1133 at 190°C under 2.16 kg load) and
(ii) the higher molecular weight (HMW) component is an ethylene polymer component having an $MFR_2$ of 0.2 to 2.5 g/10 min (according to ISO 1133 at 190°C under 2.16 kg load), and the density of ethylene polymer component (i) is higher than the density of the ethylene polymer component (ii); the density of the ethylene polymer component (i) being in the range of 930 to 950 kg/$m^3$.

**8.** Multilayered polyethylene film according to any of the preceding claims 2 to 7, wherein the third multimodal metallocene catalysed linear low density polyethylene (mLLDPE-3) can be a multimodal metallocene catalysed linear low density polyethylene as defined for the sealing layer (SL), thus can be a mLLDPE-1 or the mLLDPE-3 can be a multimodal metallocene catalysed linear low density polyethylene as defined for layer (B), respectively the core layer (CL), thus can be a mLLDPE-2.

**9.** Multilayered polyethylene film according to any of the preceding claims, wherein the film is **characterized by** a sealing initiation temperature (SIT) determined as described in the experimental part on a 3-layered blown film with a thickness of 60 μm of below 76°C, preferably in the range of 60 to 75°C, more preferably in the range of 63°C to 74°C, and even more preferably in the range of 65°C to 73°C.

**10.** Multilayered polyethylene film according to any of the preceding claims, wherein the film has a hot tack temperature (HTT) of less than 90°C, when measured according to ASTM F 1921 - 98, method B on a three-layered blown film sample (60 μm thickness), preferably, the hot tack temperature (HTT) is in the range of 65 to 88°C, more preferably in the range of 70 to 87°C and even more preferably in the range of 75 to 86°C.

**11.** Multilayered polyethylene film according to any of the preceding claims, wherein the film has a hot tack force (maximum Hot tack force) of at least 5.6 N or more, when measured according to ASTM F 1921 - 98, method B on a three-layered blown film sample (60 μm thickness), preferably, the hot tack force is in the range of 5.6 N up to 15.0 N, more preferably in the range of 5.8 to 12.0 N and even more preferably in the range of 6.0 to 10.0 N.

**12.** Multilayered polyethylene film according to any of the preceding claims, wherein the film has a dart-drop impact strength (DDI) determined according to ASTM D1709, method A on a 60 μm 3-layered test blown film of at least 500 g up to 1000 g, preferably 520 g up to 800 g and more preferably 550 g up to 700 g.

**13.** Multilayered polyethylene film according to any of the preceding claims, wherein the film are **characterized by** having at least

a) a sealing initiation temperature (SIT) determined as described in the experimental part on a 3-layered blown film with a thickness of 60 μm of below 76°C, preferably in the range of 60 to 75°C, more preferably in the range of 63°C to 74°C, and even more preferably in the range of 65°C to 73°C,
and having one, two or three of the following parameters b) to d)
b) a hot tack temperature (HTT) of less than 90°C, when measured according to ASTM F 1921 - 98 method B on a three-layered blown film sample (60 μm thickness), preferably a hot tack temperature (HTT) in the range of 65 to 88°C, more preferably in the range of 70 to 87°C and even more preferably in the range of 75 to 86°C,
c) a hot tack force (maximum Hot tack force) of at least 5.6 N or more, when measured according to ASTM F 1921 - 98 (2004), method B on a three-layered blown film sample (60 μm thickness), preferably a hot tack force in the range of 5.6 N up to 15.0 N, more preferably in the range of 5.8 to 12.0 N and even more preferably in the range of 6.0 to 10.0 N,
d) a dart-drop impact strength (DDI) determined according to ASTM D1709, method A on a 60 μm 3-layered test blown film of at least 500 g up to 1000 g , preferably 520 g up to 800 g and more preferably 550 g up to 700 g.

**14.** Use of a film according to any of the preceding claims 1 to 13 as packing material, in particular as a packing material for food and/or medical products.

Europäisches Patentamt
European Patent Office
Office européen des brevets

# EUROPEAN SEARCH REPORT

Application Number
EP 21 18 4144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>A | WO 2019/081611 A1 (BOREALIS AG [AT])<br>2 May 2019 (2019-05-02)<br>* page 3, line 3 - line 4 *<br>* page 5, line 1 *<br>* page 5, line 11 - line 13 *<br>* page 6, line 20 - line 24 *<br>* page 7, line 9 - line 10 *<br>* page 8, line 6 - line 14 *<br>* page 9, line 1 - line 5 *<br>* page 9, line 32 - page 10, line 1 *<br>* page 10, line 13 - line 19 *<br>* page 11, line 4 - line 10 *<br>* page 12, line 4 - page 14, line 16 *<br>* page 14, line 23 - line 32 *<br>* page 28, line 10 - line 16 *<br>* page 36, line 15 - line 22 *<br>* claims 1,7-9,13 *<br>----- | 1-8,10,<br>11,13,14<br>9,12 | INV.<br>B32B27/08<br>B32B27/32 |
| A,D | WO 2020/136166 A1 (BOREALIS AG [AT])<br>2 July 2020 (2020-07-02)<br>* page 11, line 27 - line 30 *<br>* claim 1; example 1; table 1 *<br>----- | 1-14 | |
| | | | TECHNICAL FIELDS SEARCHED (IPC) |
| | | | B32B |

1 The present search report has been drawn up for all claims

| Place of search | Date of completion of the search | Examiner |
|---|---|---|
| The Hague | 18 December 2021 | Matthijssen, J-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 18 4144

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2021

| Patent document cited in search report | Publication date | Patent family member(s) | Publication date |
|---|---|---|---|
| WO 2019081611 A1 | 02-05-2019 | CN 111315567 A | 19-06-2020 |
| | | EP 3700744 A1 | 02-09-2020 |
| | | WO 2019081611 A1 | 02-05-2019 |
| WO 2020136166 A1 | 02-07-2020 | CN 113302054 A | 24-08-2021 |
| | | EP 3902677 A1 | 03-11-2021 |
| | | WO 2020136166 A1 | 02-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008104371 A
- WO 2006037603 A
- WO 2016198273 A
- WO 2021009189 A
- WO 2021009190 A
- WO 2021009191 A
- WO 2021009192 A
- WO 03066698 A
- WO 2008034630 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- EP 3257895 A1
- WO 2020136166 A
- WO 2019081611 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253